# EUROPÄISCHE PATENTANMELDUNG

(11) **EP 4 837 417 A1**
(43) Veröffentlichungstag der Anmeldung: **11.11.2026**
(21) Anmeldenummer: 26176808.9
(22) Anmeldetag: 06.05.2026
(51) Int. Cl.: A01M 21/02, A01B 39/08, A46B 13/00

(54) **VORRICHTUNG ZUR UNKRAUTBEKÄMPFUNG**

(30) Priorität: 08.05.2025 AT 601062025
(71) Anmelder: Teufl GmbH, 3508 Krustetten (AT)
(72) Erfinder: Teufl, Bernhard, 3508 Krustetten (AT)
(74) Vertreter: Babeluk Patentanwälte GmbH

(57) **Zusammenfassung**

Die Erfindung betrifft eine Vorrichtung zur Unkrautbekämpfung mit einem an einem Fahrzeug anbringbaren Ausleger (1), einer Antriebseinheit (2) und mindestens einer an der Antriebseinheit (2) um eine Achse (8) drehbar gelagerten Bürsteneinheit (5), wobei die Bürsteneinheit (5) mehrere axial übereinander angeordnete scheibenförmige erste Bürsten (51) und gegebenenfalls eine zweite Bürste (52) aufweist, wobei die Vorrichtung eine Halterung (6) aufweist, welche eine Abstreifeinrichtung (7) mit bogenförmigen Elementen (71) aufweist, die jeweils zwischen den Bürsten (51, 52) angeordnet sind und deren radialer Abstand (D) zur Achse (8) der Bürsteneinheit (5) einstellbar ist.

## Beschreibung

Die Erfindung betrifft eine Vorrichtung gemäß Anspruch 1, nämlich eine Vorrichtung zur Unkrautbekämpfung mit einem an einem Fahrzeug anbringbaren Ausleger, einer Antriebseinheit und mindestens einer an der Antriebseinheit um eine Achse drehbar gelagerten Bürsteneinheit, wobei die Bürsteneinheit mehrere axial übereinander angeordnete scheibenförmige erste Bürsten aufweist.

Der Bewuchs von sicherheitsrelevanten Objekten, wie beispielsweise Zäunen, mit Pflanzen kann zu einer hohen mechanischen Belastung und somit zu Beschädigungen an den Objekten kommen. Eine mögliche Methode, um diese Pflanzen zu entfernen, ist eine Reinigung mit einer an einem Ausleger eines Fahrzeuges befestigten Bürste.

US 2007277334 A1 beschreibt eine Vorrichtung zum Entfernen von Partikelansammlungen, wie beispielsweise Schnee von erhöhten Objekten, wie beispielsweise Schilder oder eine Randfeuerung auf Flugplätzen. Die Vorrichtung besteht im Wesentlichen aus zwei an einem beweglichen Fahrzeugausleger angebrachten vertikal rotierenden Bürsten.

Ein Nachteil an dieser Vorrichtung ist, dass bei einer Anwendung in der Unkrautbekämpfung hochgewachsene Pflanzen oder Kletterpflanzen sich um die Bürsten wickeln können und so zu Beschädigungen an der Vorrichtung oder zu einer Reduktion der Reinigungsleistung führen können.

Aufgabe der vorliegenden Erfindung ist es, eine Vorrichtung zur Unkrautbekämpfung mit rotierenden Bürsten bereitzustellen, bei welcher durch konstruktive Maßnahmen verhindert wird, dass sich im Betrieb Unkraut oder andere Objekte um die Bürsten wickeln und somit Beschädigungen oder eine Reduktion der Reinigungsleistung verursachen.

Die Aufgabe wird erfindungsgemäß durch die Merkmale von Anspruch 1 gelöst, nämlich dadurch, dass die Vorrichtung eine Halterung aufweist, welche eine Abstreifeinrichtung mit bogenförmigen Elementen aufweist, die zwischen den ersten Bürsten angeordnet sind und deren radialer Abstand zur Achse der Bürsteneinheit einstellbar ist. Dadurch werden die Bürsten kontinuierlich abgestreift und so ein Umwickeln der Bürsteneinheit mit Unkraut und anderen Objekten verhindert.

Darüber hinaus sorgt die Abstreifeinrichtung dafür, dass eine konstante Distanz der Bürsteneinheit zum zu reinigenden Objekt, wie beispielsweise ein Zaun, eingehalten wird. Dies verhindert sowohl Beschädigungen am Objekt als auch an der Vorrichtung, insbesondere den Bürsten, selbst.

Unter dem Abstand ist dabei der Abstand zwischen der Achse und dem ihr nächstliegenden Punkt eines Elements gemeint.

Vorzugsweise ist vorgesehen, dass die bogenförmigen Elemente als Rohre ausgeführt sind. Durch den runden Querschnitt wird ein beschädigungsfreies Gleiten entlang des zu reinigenden Objekts gewährleistet und die Bürsten geschont. Die Ausführung als Rohr bietet außerdem eine hohe mechanische Stabilität und ein niedriges Gewicht.

In einer alternativen Ausführungsform können die bogenförmigen Elemente auch einen rechteckigen Querschnitt aufweisen. Insbesondere ist dabei eine Ausführung als Flachstahlstreifen gemeint.

Es ist vorzugsweise vorgesehen, dass die bogenförmigen Elemente aus Stahl und/ oder Aluminium und/oder Kunststoff gefertigt werden. Diese Materialien beziehungsweise ihre Kombination bietet eine hohe mechanische Stabilität bei niedrigem Gewicht und einer möglichst großen Schonung des Zauns und der Bürsten.

Vorteilhaft ist es, wenn der radiale Abstand der bogenförmigen Elemente zur Achse der Bürsteneinheit betriebsmäßig einstellbar ist. Darunter ist zu verstehen, dass eine Einstellung des Abstandes während des Betriebs der Vorrichtung möglich ist. Damit wird ermöglicht, dass der Abstand an neue Bedingungen, beispielsweise an unterschiedlich starkem Bewuchs mit Unkraut oder eine andere Konstruktionsart des Zaunes angepasst werden kann.

Besonders vorteilhaft ist es dabei, wenn die Vorrichtung einen elektrischen oder hydraulischen Stellmotor aufweist, durch den die betriebsmäßige Einstellung des radialen Abstandes der bogenförmigen Elemente erfolgt.

In einer bevorzugten Ausführungsform ist vorgesehen, dass die Bürsteneinheit zumindest eine scheibenförmige zweite Bürste aufweist, welche koaxial zu den ersten Bürsten angeordnet ist und einen zweiten Durchmesser aufweist, der größer ist als ein erster Durchmesser der ersten Bürsten. Diese Ausführungsform ermöglicht es, dass die zweite Bürste den Zaun untergreift und somit eine besonders gründliche Entfernung des Unkrauts ermöglicht.

Es ist vorzugsweise vorgesehen, dass die ersten Bürsten und die zweite Bürste auf einer gemeinsamen Welle angeordnet sind. Dies ermöglicht eine technisch einfache und zuverlässige Konstruktion.

Besonders vorteilhaft ist es, wenn die zweite Bürste auf dem der Antriebseinheit gegenüberliegenden Ende der Bürsteneinheit angeordnet ist. Somit wird es möglich in der Anwendung der Vorrichtung eine sehr geringe Distanz zwischen zweiter Bürste und dem Boden erreichen zu können, was das Untergreifen des Zaunes wesentlich erleichtert.

Bevorzugt ist vorgesehen, dass zwischen den ersten Bürsten und/oder der zweiten Bürste Distanzhalteringe angeordnet sind. Dadurch wird sichergestellt, dass die Bürsten einen definierten Abstand zueinander einhalten und so auch die Abstreifwirkung der bogenförmigen Elemente aufrechterhalten wird.

Es ist von Vorteil, wenn die Distanzhalteringe auf gleicher axialer Höhe angeordnet sind wie die bogenförmigen Elemente. Die bogenförmigen Elemente können so in die durch die Distanzhalteringe gebildeten Abstände zwischen den Bürsten eingreifen und eine optimale Abstreifwirkung erzielen.

Ein weiterer Vorteil ist, wenn die axiale Breite der Distanzhalteringe gleich groß oder kleiner ist wie der Querschnitt der bogenförmigen Elemente. Dadurch wird erreicht, dass es keinen Abstand zwischen den Bürsten und den bogenförmigen Elementen gibt und die Abstreifwirkung so sichergestellt ist.

Bevorzugt ist vorgesehen, dass die Distanzhalteringe aus Kunststoff, vorzugsweise Polyurethan-Hartschaumwerkstoff, gefertigt sind. Dies stellt einerseits eine stoßdämpfende Wirkung zur Schonung von Bürsten und der Antriebseinheit sicher, andererseits wird so eine ausreichende mechanische Stabilität für den Betrieb gewährleistet.

In der Folge wird die Erfindung anhand einer nicht einschränkenden Ausführungsvariante in den Figuren dargestellt. Es zeigen:
- Fig. 1: eine Frontalansicht einer erfindungsgemäßen Vorrichtung;
- Fig. 2: eine Schrägansicht der erfindungsgemäßen Vorrichtung aus Fig. 1 ohne Bürsten;
- Fig. 3: eine Schrägansicht der erfindungsgemäßen Vorrichtung mit Bürsten; und
- Fig. 4: eine Untersicht der erfindungsgemäßen Vorrichtung ohne Bürsten.

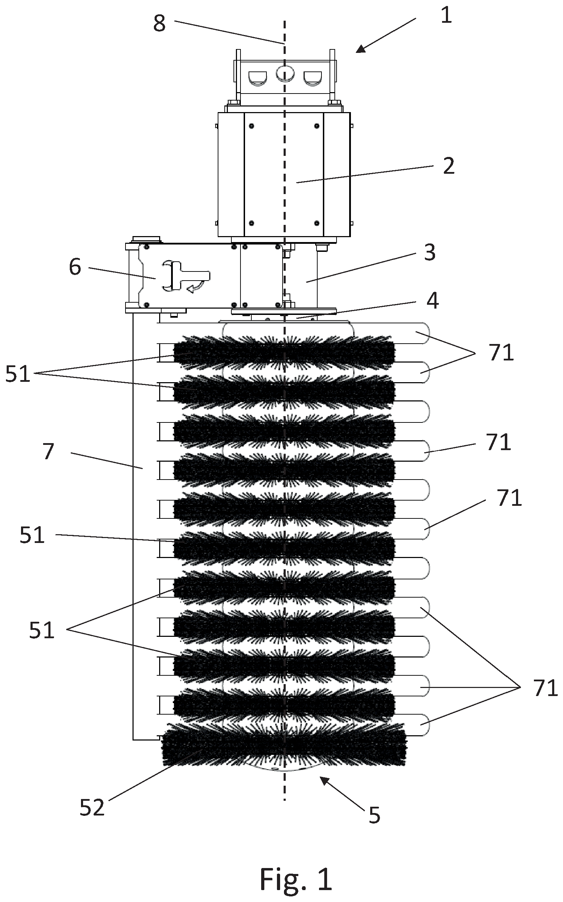

Fig. 1 zeigt eine Frontalansicht einer erfindungsgemäßen Vorrichtung, welche an einem in dieser Ansicht nur angedeuteten Ausleger 1 befestigt ist, der wie üblich aus mehreren gelenkig miteinander verbundenen Segmenten besteht, die teilweise teleskopisch ausfahrbar sind, sodass der Ausleger 1 mit mehreren Freiheitsgraden in alle Richtungen beweglich ist. Bevorzugterweise ist der Ausleger auf einem Fahrzeug, wie beispielsweise einem Traktor, angeordnet, welches außerdem ein Antriebsmittel, wie zum Beispiel ein Hydrauliksystem, zum Antrieb der Vorrichtung bereitstellen kann.

Am Ausleger 1 ist zunächst eine Antriebseinheit 2 angebracht, welche beispielsweise hydraulisch oder elektrisch angetrieben und mit entsprechenden Antriebsmitteln versorgt wird. Daran angeschlossen befindet sich ein Lagergehäuse 3, aus welchem eine Welle 4 auskragt, welche durch die Antriebseinheit 2 in eine Rotationsbewegung um eine Achse 8 versetzt werden kann. Auf der Welle 4 ist eine Bürsteneinheit 5 angeordnet. Diese Bürsteneinheit 5 weist mehrere scheibenförmige erste Bürsten auf, die axial übereinander angeordnet sind. An dem der Antriebseinheit 2 gegenüberliegenden Ende der Bürsteneinheit 5 ist eine scheibenförmige zweite Bürste 52 angeordnet, welche einen größeren Durchmesser als die ersten Bürsten 51 aufweist.

An der Antriebseinheit 2 ist eine Halterung 6 befestigt, an der eine Abstreifeinrichtung 7 drehbar gelagert ist. Die Abstreifeinrichtung 7 ist in gezeigter Ausführungsform ein Rohr, welches parallel zur Bürsteneinheit 5 ausgerichtet ist. An der Abstreifeinrichtung 7 sind rechtwinklig abstehende bogenförmige Elemente angebracht, welche in die Zwischenräume zwischen den ersten Bürsten 51 beziehungsweise der zweiten Bürste 52 eingreifen. Die Abstreifeinrichtung 7 erfüllt somit zwei Funktionen. Einerseits stellt sie sicher, dass ein definierter Abstand der Bürsteneinheit 5 zum zu reinigenden Objekt eingehalten wird, andererseits streifen sich die ersten Bürsten 51 beziehungsweise die zweite Bürste 52 an den Elementen 71 ab. Somit wird verhindert, dass sich Unkraut oder andere Objekte um die Bürsteneinheit 5 wickeln und so zu Beschädigungen oder einer Einschränkung der Reinigungsleistung führen.

Durch eine Rotationsbewegung der Abstreifeinrichtung 7 kann der Abstand der Elemente 71 zur Bürsteneinheit eingestellt werden. Diese Anpassung kann aufgrund des Verschmutzungsgrades oder der Art der Verschmutzung erfolgen, beispielsweise wird ein großer Abstand gewählt, wenn lang gewachsenes Unkraut entfernt wird, um das Risiko einer Umwicklung zu minimieren.

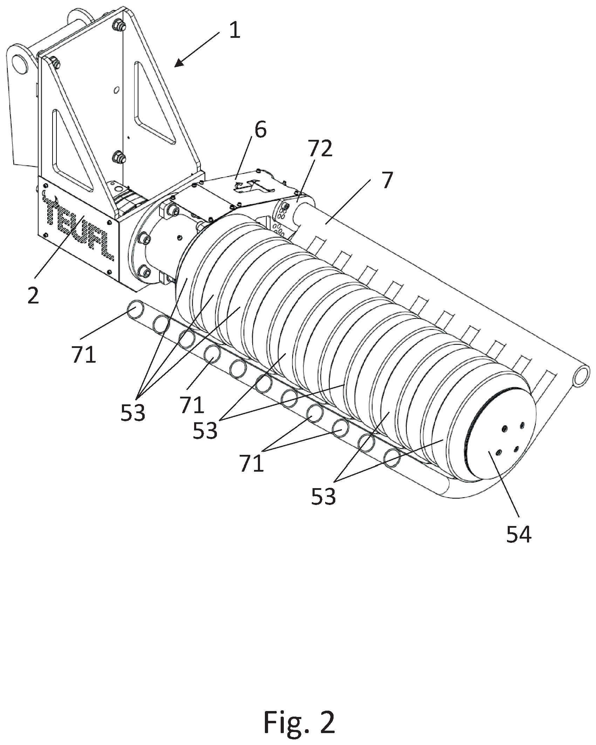

Fig. 2 zeigt eine Schrägansicht der Vorrichtung, welche aus Gründen der Übersichtlichkeit ohne Bürsten dargestellt ist. In dieser Ansicht ist erkennbar, dass die Einstellung des Abstandes der Elemente 71 durch einen Flansch 72 der Abstreifvorrichtung 7 erfolgt, welcher mehrere Öffnungen aufweist, um den Flansch 72 mit der Halterung 6, die ebenfalls mehrere Öffnungen aufweist, in einer Vielzahl möglicher Positionen zu verschrauben.

In einer nicht dargestellten Ausführungsform kann die Einstellung während des Betriebes der Vorrichtung erfolgen, indem beispielsweise ein elektrischer oder hydraulischer Stellmotor an der Halterung 6 vorgesehen ist.

In Fig. 2 sind auch Distanzhalteringe 53 zu sehen, welche zwischen den Bürsten angeordnet sind und vorzugsweise aus Polyurethan-Hartschaum gefertigt sind. Diese sorgen durch eine stoßdämpfende Wirkung einerseits für Schonung der Bürsten und der Antriebseinheit 2, stellen aber auch sicher, dass Bürsten einen konstanten Abstand zueinander einhalten und somit die Elemente 71 zuverlässig funktionieren. Eine Abschlussplatte 54 sichert die Bürsteneinheit 5 auf der Welle 4 nach unten.

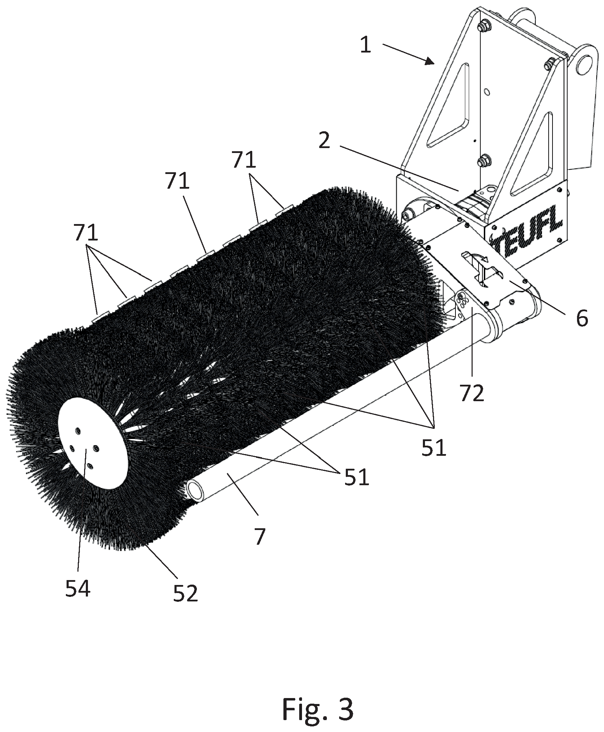

Fig. 3 zeigt eine Seitenansicht der Vorrichtung mit Bürsten. In dieser Darstellung ist erkennbar, wie die Elemente 71 der Abstreifvorrichtung 7 in die Zwischenräume zwischen den ersten Bürsten 51 beziehungsweise der zweiten Bürste 52 eingreifen und auf der gegenüberliegenden Seite aus den Zwischenräumen wieder herausragen.

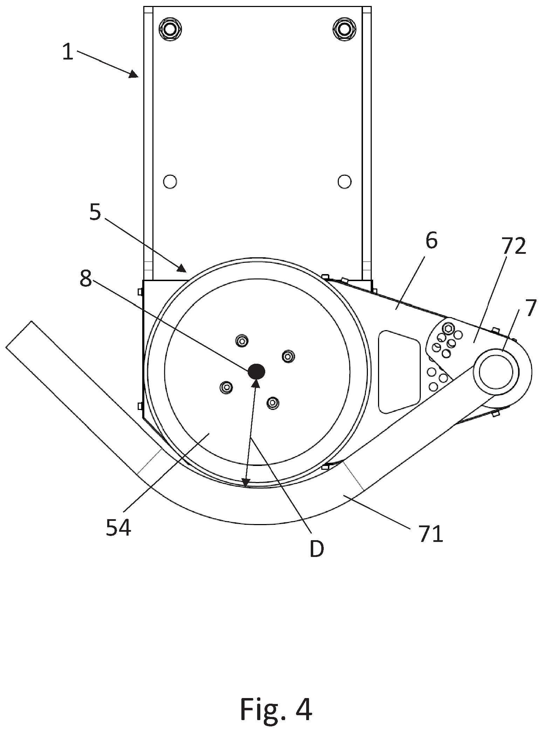

Fig. 4 zeigt eine Untersicht einer erfindungsgemäßen Vorrichtung, wobei auch hier aus Übersichtlichkeitsgründen die Borsten nicht dargestellt sind. Die Abstreifvorrichtung 7 ist über den Flansch 72 mit der Halterung 6 verbunden und somit eine Schwenkposition der Abstreifvorrichtung 7 festgelegt. Über die Verschwenkung der Abstreifvorrichtung 7 wird der Abstand D der bogenförmigen Elemente 71 zur Achse 8 der Bürsteneinheit eingestellt. Der Abstand D ist dabei der Abstand des dem der Achse 8 nächstliegenden Punkt eines bogenförmigen Elements 71 zur Achse 8.

## Patentansprüche

1. Vorrichtung zur Unkrautbekämpfung mit einem an einem Fahrzeug anbringbaren Ausleger (1), einer Antriebseinheit (2) und mindestens einer an der Antriebseinheit (2) um eine Achse (8) drehbar gelagerten Bürsteneinheit (5), wobei die Bürsteneinheit (5) mehrere axial übereinander angeordnete scheibenförmige erste Bürsten (51) und gegebenenfalls eine zweite Bürste (52) aufweist, **dadurch gekennzeichnet, dass** die Vorrichtung eine Halterung (6) aufweist, welche eine Abstreifeinrichtung (7) mit bogenförmigen Elementen (71) aufweist, die jeweils zwischen den Bürsten (51, 52) angeordnet sind und deren radialer Abstand (D) zur Achse (8) der Bürsteneinheit (5) einstellbar ist.

2. Vorrichtung nach Anspruch 1, **dadurch gekennzeichnet, dass** die bogenförmigen Elemente (71) als Rohre ausgeführt sind.

3. Vorrichtung nach Anspruch 1, **dadurch gekennzeichnet, dass** die bogenförmigen Elemente (71) einen rechteckigen Querschnitt aufweisen.

4. Vorrichtung nach einem der Ansprüche 1 bis 3, **dadurch gekennzeichnet, dass** die bogenförmigen Elemente (71) aus Stahl und/oder Aluminium und/oder Kunststoff gefertigt sind.

5. Vorrichtung nach einem der Ansprüche 1 bis 4, **dadurch gekennzeichnet, dass** der radiale Abstand (D) der bogenförmigen Elemente (71) zur Achse (8) der Bürsteneinheit (5) betriebsmäßig einstellbar ist.

6. Vorrichtung nach Anspruch 5, **dadurch gekennzeichnet, dass** die Vorrichtung einen elektrischen oder hydraulischen Stellmotor aufweist, durch den die betriebsmäßige Einstellung des radialen Abstandes (D) der bogenförmigen Elemente (71) erfolgt.

7. Vorrichtung nach einem der Ansprüche 1 bis 6, **dadurch gekennzeichnet, dass** die Bürsteneinheit (5) zumindest eine scheibenförmige zweite Bürste (52) aufweist, welche koaxial zu den ersten Bürsten (51) angeordnet ist und einen zweiten Durchmesser aufweist, der größer ist als ein erster Durchmesser der ersten Bürsten (51).

8. Vorrichtung nach Anspruch 7, **dadurch gekennzeichnet, dass** die ersten Bürsten (51) und die zweite Bürste (52) auf einer gemeinsamen Welle (4) angeordnet sind.

9. Vorrichtung nach einem der Ansprüche 7 oder 8, **dadurch gekennzeichnet, dass** die zweite Bürste (53) auf dem der Antriebseinheit (2) gegenüberliegenden Ende der Bürsteneinheit (5) angeordnet ist.

10. Vorrichtung nach einem der Ansprüche 1 bis 9, **dadurch gekennzeichnet, dass** zwischen den ersten Bürsten (51) und/oder der zweiten Bürste (52) Distanzhalteringe (53) angeordnet sind.

11. Vorrichtung nach Anspruch 10, **dadurch gekennzeichnet, dass** die Distanzhalteringe (53) auf gleicher axialer Höhe angeordnet sind wie die bogenförmigen Elemente (71).

12. Vorrichtung nach einem der Ansprüche 10 oder 11, **dadurch gekennzeichnet, dass** die axiale Breite der Distanzhalteringe (53) gleich groß oder kleiner ist wie der Querschnitt der bogenförmigen Elemente (71).

13. Vorrichtung nach einem der Ansprüche 10 bis 12, **dadurch gekennzeichnet, dass** die Distanzhalteringe (53) aus Kunststoff, vorzugsweise Polyurethan-Hartschaumwerkstoff, gefertigt sind.
